# EUROPÄISCHE PATENTSCHRIFT

(11) **EP 3 824 106 B1**
(45) Veröffentlichungstag und Bekanntmachung des Hinweises auf die Patenterteilung: **11.09.2024**
(21) Anmeldenummer: 19742540.8
(22) Anmeldetag: 08.07.2019
(51) Int. Cl.: C21D 1/06, C21D 1/18, C22C 38/18, H01M 8/04082, C23C 8/26, C21D 1/613, C21D 6/00, C21D 9/14, C21D 1/76, C21D 9/08, C21D 1/62, C21D 6/04, C22C 38/00, C22C 38/06, C22C 38/20, C22C 38/22, C22C 38/30, C22C 38/36, C22C 38/38, C22C 38/40

(54) **VERFAHREN ZUR HERSTELLUNG EINES BRENNSTOFFZELLENSYSTEMS ENTHALTEND EIN BAUTEIL AUS EINEM STAHL MIT EINER STICKSTOFFHALTIGEN SCHUTZSCHICHT**
METHOD OF PRODUCING A FUEL CELL SYSTEM HAVING A COMPONENT OUT OF A STEEL WITH A NITROGEN CONTAINING PROTECTION LAYER
MÉTHODE DE PRODUCTION D'UN SYSTÈME DE PILE À COMBUSTIBLE FAIT D'UNE COMPOSANTE EN ACIER AVEC UNE COUCHE PROTECTRICE CONTENANT D'AZOTE

(30) Priorität: 20.07.2018 DE 102018212111
(43) Veröffentlichungstag der Anmeldung: 26.05.2021
(73) Patentinhaber: Robert Bosch GmbH, 70442 Stuttgart (DE)
(72) Erfinder: WOEHRLE, Thomas, 74078 Heilbronn (DE); FAYEK, Patrick, 71229 Leonberg (DE)
(86) Internationale Anmeldenummer: PCT/EP2019/068246
(87) Internationale Veröffentlichungsnummer: WO 2020/016040

(56) Entgegenhaltungen:
- EP-A1- 3 070 180
- EP-A1- 3 070 180
- WO-A2-01/68933
- WO-A2-01/68933
- CN-A- 108 118 260
- CN-A- 108 118 260
- DE-A1- 102004 039 926
- DE-A1- 102004 039 926
- JP-A- 2007 073 433
- JP-A- 2007 073 433
- US-A- 5 873 956
- US-A- 5 873 956

## Beschreibung

Die Erfindung betrifft die Verwendung eines Bauteils aus einem Stahl mit einer stickstoffhaltigen Schutzschicht in einem Brennstoffzellensystem und ein Herstellungsverfahren eines solchen Bauteils.

### Stand der Technik

Stahlhaltige Bauteile, insbesondere in Form von Martensiten oder Ferriten, sind unter anderem für Anwendungen unter Wasserstoffatmosphäre, beispielsweise im Bereich von Brennstoffzellen, im Einsatz. Dabei kann es bedingt durch das Eindiffundieren von Wasserstoff in das Bauteil zu einer Degradation der mechanischen Eigenschaften des Bauteils, was auch als Wasserstoffversprödung bezeichnet wird, und somit zum Versagen des Bauteils kommen.

Durch ein Hochtemperaturaufsticken des Bauteils kann Stickstoff im Randbereich eines Martensits sowie eines Ferrits gelöst werden, wodurch sich eine austenitische Randschicht ausbilden kann. Durch die austenitische Randschicht und den in den Werkstoff des Bauteils eingebrachten Stickstoff wird ein Eindiffundieren von Wasserstoff in das Bauteil signifikant eingeschränkt. Ein derart behandelter Stahl bringt entsprechend deutliche Vorteile im Einsatz unter Wasserstoff.

Das Dokument DE 10 2012 216 117 A1 hat ein Verfahren zum Herstellen einer selbstschneidenden Schraube zum Gegenstand, wobei ein Rohling aus einem martensitisch härtbaren Stahl bereitgestellt wird, aus dem Rohling eine Schraubenform gefertigt wird und die Schraubenform anschließend bei einer Temperatur > 900°C in einer stickstoffhaltigen Gasatmosphäre gehärtet wird. Die Temperatur zur Härtung in der stickstoffhaltigen Gasatmosphäre beträgt bevorzugt zwischen 1000°C und 1200°C. Der thermochemische Prozess führt zu einer Aufstickung der Randzone und damit verbunden zu einer gegenüber dem Grundwerkstoff erhöhten Härte. Der Stahl des Rohlings weist bevorzugt einen Chromgehalt > 12 % und/oder einen Nickelgehalt > 2,5 % auf. Im Anschluss an das Härten und gegebenenfalls an ein Abschrecken wird die Schraubenform bei einer Temperatur zwischen 150°C und 450°C angelassen.

Das Dokument WO 2012/146254 A1 betrifft ein Verfahren zur Bildung eines Austenits und/oder eines Martensits, wobei mindestens Stickstoff in einem Werkstück bei einer Temperatur T1 gelöst wird. Bevorzugt wird ein Stickstoff enthaltendes Gas wie N2 eingesetzt, wobei der Druck des Gases mehrere bar, aber auch weniger als 1 bar wie 0,1 bar betragen kann. Die Temperatur T1 beträgt bevorzugt mehr als 1000°C und weniger als 1350°C und die Hochtemperaturbehandlung bei der Temperatur T1 wird beispielsweise für mehr als 20 min oder auch für mehr als 15 h durchgeführt. Ferner kann ein Zwischenkühlungsschritt durchgeführt werden. Ein Kühlgas kann Stickstoff bei einem Druck von 6 bis 10 bar sein. Bevorzugt ist das Kühlgas ein Edelgas wie Helium, Neon, Argon, Krypton, Xenon oder Radon.

Das Dokument DE 10 2008 050 458 A1 offenbart Schmucksachen aus einem ferritischen Chromstahl, der aus einem ferritischen Kern mit einer im Wesentlichen martensitischen Randschicht gebildet ist. Es sind auch Ausführungsformen eingeschlossen, bei denen die Randschicht noch einen geringen Anteil, in Abhängigkeit vom eingelagerten C- und N-Gehalt des Stahlwerkstoffs, an Restaustenit aufweist. Die Ausbildung der martensitischen Randschicht erfolgt bevorzugt durch eine Wärmebehandlung wie Aufsticken, wobei der Stahlwerkstoff bei einer Temperatur zwischen 1000°C und 1200°C in einer stickstoffhaltigen Gasatmosphäre mit einer nachfolgenden Abkühlung behandelt wird. Gemäß einem Beispiel wird die Stahlsorte 1.4016 bei Temperaturen von mehr als 1.050°C mit Stickstoff aufgestickt, abgeschreckt bzw. tiefgekühlt und angelassen. Durch das Einlagern von Stickstoff kommt es zu einer Umwandlung in Austenit, wobei beim darauffolgenden Abschrecken Martensit entsteht. JP 2007 073443 offenbart ein Verfahren zur Herstellung eines Brennstoffzellensystems mit einem Aufsticken.

### Offenbarung der Erfindung

Es wird ein Verfahren zur Herstellung eines Bauteils aus einem Stahl mit einer stickstoffhaltigen Schutzschicht vorgeschlagen. Das erfindungsgemäß hergestellte Bauteil ist beispielsweise in einem Brennstoffzellensystem verwendbar. Das Verfahren umfasst dabei mindestens die nachfolgend genannten Schritte:
Zunächst erfolgt ein Glühen des Bauteils aus Stahl in einer stickstoffhaltigen Atmosphäre auf eine Temperatur zwischen 900 °C und 1300 °C, auf der ein isothermes Halten in einem Zeitraum zwischen einer Minute und zwölf Stunden durchgeführt wird.

Durch das besagte Glühen des Bauteils unter stickstoffhaltiger Atmosphäre wird die Stickstofflöslichkeit gesteigert. Aus der stickstoffhaltigen Atmosphäre diffundiert Stickstoff in den Stahl und bildet eine stickstoffhaltige Diffusionszone. Dieser Vorgang wird auch als Hochtemperatur-Nitrieren bezeichnet. In Stählen, die beim Glühen ferritisch sind, entsteht bei ausreichendem Stickstoffeintrag eine austentitische Randschicht. In Stählen, die beim Glühen austentisch, beispielsweise martensitische Güten, sind, wird durch einen ausreichenden Stickstoffeintrag der Austenit in der Randschicht mit Stickstoff angereichert und chemisch stabilisiert. Bei ausreichendem Stickstoffeintrag entsteht somit eine austenitische stickstoffhaltige Diffusionszone, welche zu einer verringerten Eindiffusion von Wasserstoff in das Bauteil führt.

Anschließend erfolgt ein Abschrecken des Bauteils aus Stahl. Beim Abschrecken wird das Bauteil von der beim Glühen erhaltenen Temperatur in verhältnismäßig kurzer Zeit abgekühlt. Durch das Glühen und Abschrecken erfolgt gegebenenfalls eine Härtung des Bauteils aus Stahl. Insbesondere verbleibt der zuvor in die Randschicht diffundierte Stickstoff dabei in der besagten Randschicht. Bei Stählen, die beim Glühen eine vollständig austenitische Struktur aufweisen, kommt es beim Abschrecken im nicht ausreichend mit Stickstoff angereicherten Kern zu einer Umwandlung in Martensit und somit zu einer Härtung. Stähle, die beim Glühen ferritisch sind, bleiben beim Abschrecken im Kern ferritisch. Die Randschicht jedoch bleibt in beiden Fällen bei ausreichend hohem Stickstoffgehalt austenitisch.

Danach erfolgt ein Tiefkühlen des Bauteils bei einer Temperatur von weniger als -70 °C. Das Tiefkühlen kann in einem Temperaturbereich zwischen -70 °C und - 273 °C erfolgen. Das Tiefkühlen dient der Reduktion von Restaustenitanteilen im Kernbereich bei martensitischen Güten. Bei der Umwandlung in Martensit kann es im Kernbereich zu nicht umgewandelten Austenitanteilen kommen, welche als Restaustenit bezeichnet werden. Dieser Restaustenit wird durch das Tiefkühlen in Martensit umgewandelt.

Anschließend erfolgt ein Anlassen des Bauteils aus Stahl bei einer Temperatur von mehr als 150 °C. Das Anlassen kann beispielsweise in einem Temperaturbereich zwischen 150 °C und 600 °C erfolgen. Durch das Anlassen wird die Festigkeit im Vergleich zum unangelassenen Zustand abgesenkt. Dies ist erwünscht, da so eine geeignete Festigkeit kontrolliert eingestellt werden kann. Ebenfalls verbessern sich beispielsweise die Zähigkeit, Bruchdehnung und Duktilität.

Gemäß der Erfindung wird das Glühen des Bauteils aus Stahl bei einem Stickstoffpartialdruck zwischen 50 mbar und 5 bar durchgeführt. Über den Druck kann der Stickstoffgehalt in der Randschicht eingestellt werden. Je nach Stahl, kann über den Druck ein angepasster optimaler Stickstoffgehalt eingestellt werden.

Gemäß der Erfindung wird das Abschrecken des Bauteils aus Stahl bei einem Abschreckdruck zwischen 1 bar und 40 bar durchgeführt. Gemäß einer besonders bevorzugten Ausgestaltung der Erfindung wird das Abschrecken des Bauteils aus Stahl bei einem Abschreckdruck zwischen 1,5 bar und 10 bar durchgeführt.

Gemäß der Erfindung wird das Abschrecken des Bauteils aus Stahl mit einem Abschreckmedium durchgeführt. Bei dem Abschreckmedium handelt es sich um ein Gas, das ausgewählt ist aus einer Gruppe von Stickstoff, Argon und Helium. Bei Argon und Helium handelt es sich um Edelgase. Diese weisen eine hohe Wärmekapazität auf, wodurch eine hohe Abkühlwirkung erreicht werden kann. Zudem reagieren Edelgase nicht mit dem Stahl. Stickstoff reagiert zwar prinzipiell mit der Stahloberfläche, ist aber durch den Prozess ohnehin schon im Werkstoff enthalten. Gegenüber Argon und Helium ist Stickstoff zumeist deutlich günstiger.

Das Abschrecken des Bauteils aus Stahl wird auf eine Temperatur von weniger als 50 °C durchgeführt.

Vorzugsweise wird das Abschrecken des Bauteils aus Stahl verhältnismäßig schnell durchgeführt. Ein schnelles Abschrecken verhindert vorteilhaft die Bildung von Chromnitrid in dem Bauteil. Chromnitrid würde die Korrosionsbeständigkeit des Bauteils verringern.

Gemäß der Erfindung wird das Tiefkühlen des Bauteils aus Stahl über einen Zeitraum zwischen 15 Minuten und 30 Minuten durchgeführt.

Das Anlassen des Bauteils wird in einer stickstoffhaltigen Atmosphäre durchgeführt. Ein Anlassen in einer stickstoffhaltigen Atmosphäre verhindert eine Stickstoffeffusion aus dem Werkstoff und eine Oxidation der Oberfläche. Der Stickstoffpartialdruck kann beispielsweise dem Atmosphärendruck entsprechen. Der Zeitraum liegt dabei vorzugsweise zwischen 30 min und 8 Stunden.

Vorzugsweise enthält der Stahl des Bauteils zwischen 10 Gew% und 20 Gew% Chrom. Weitere Komponenten des Stahls sind beispielsweise:

| | | |
|---|---|---|
| Kohlenstoff | von 0 Gew% | bis 2 Gew%, |
| Stickstoff | von 0 Gew% | bis 2 Gew%, |
| Nickel | von 0 Gew% | bis 2 Gew%, |
| Mangan | von 0 Gew% | bis 2 Gew%, |
| Molybdän | von 0 Gew% | bis 2 Gew%, |
| Kobalt | von 0 Gew% | bis 2 Gew%, |
| Kupfer | von 0 Gew% | bis 2 Gew%, |
| Aluminium | von 0 Gew% | bis 2 Gew%, |
| Eisen | von 64 Gew% | bis 90 Gew%, |

Auch weitere Elemente, wie beispielsweise Silizium, können in dem Stahl als Komponenten enthalten sein. Die Summe der Gewichtsprozente der Komponenten ergibt sich dabei zu 100 Gew%.

Es wird auch ein Bauteil vorgeschlagen, welches mit dem erfindungsgemäßen Verfahren hergestellt ist und eine stickstoffhaltige Schutzschicht aufweist. Bei dem Bauteil handelt es sich beispielsweise um eine Rohrleitung zum Transport von Wasserstoff zur Verwendung in einem Brennstoffzellensystem.

Ein erfindungsgemäßes Bauteil findet erfindungsgemäß Verwendung in einem Brennstoffzellensystem, insbesondere in Form einer Rohrleitung zum Transport von Wasserstoff.

### Vorteile der Erfindung

Wie bereits erwähnt wird durch die stickstoffhaltige Schutzschicht eine Eindiffusion von Wasserstoff in das Bauteil eingeschränkt. Dadurch ist eine Wasserstoffversprödung des Bauteils vorteilhaft vermindert oder vollständig verhindert. Die Anfälligkeit des Bauteils in einer wasserstoffhaltigen Atmosphäre ist somit verringert, wodurch das Bauteil in einer wasserstoffhaltigen Atmosphäre eingesetzt werden kann. Die Schutzschicht wird vorteilhaft und einfach durch eine Eindiffusion von Stickstoff und die damit verbundene Bildung einer stabilen austenitischen Randschicht erzeugt. Vorteilhaft werden dabei Eigenschaften des Grundmaterials des Bauteils, vor allem mechanische Eigenschaften des Stahls, erhalten. Insbesondere kann die Härte des Bauteils nach Bedarf eingestellt werden. Vorteilhaft bleibt somit eine gewünscht elastische Verformbarkeit des Bauteils erhalten.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung eines Verfahrens zur Herstellung eines Bauteils aus einem Stahl mit einer stickstoffhaltigen Schutzschicht in Form eines Ablaufdiagramms,
- Figur 2: eine schematische Darstellung eines Querschnitts durch ein rohrförmiges Bauteil, das mit dem in Figur 1 dargestellten Verfahren hergestellt ist, und
- Figur 3: eine schematische Darstellung eines Brennstoffzellensystems.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

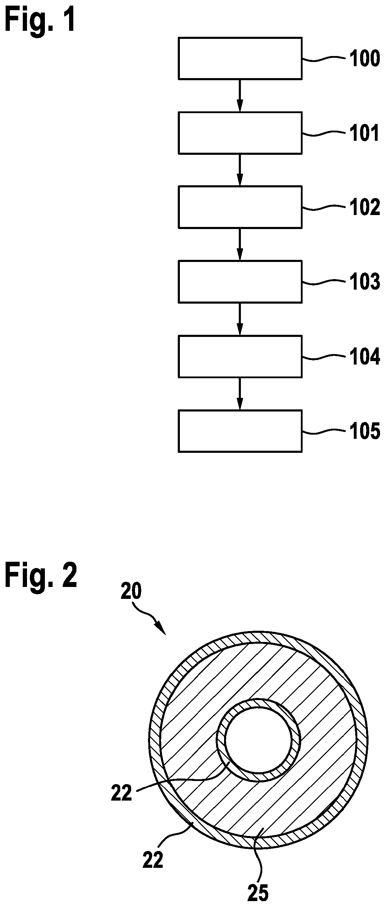

Figur 1 zeigt eine schematische Darstellung eines Verfahrens zur Herstellung eines Bauteils 20 aus einem Stahl mit einer stickstoffhaltigen Schutzschicht 22 in Form eines Ablaufdiagramms.

In einem Startschritt 100 wird ein Bauteil 20 aus einem Stahl bereitgestellt. Der Stahl enthält neben Eisen mehrere Komponenten, beispielsweise 0,5 Gew% Kohlenstoff und 15 Gew% Chrom. Das Bauteil 20 ist beispielsweise rohrförmig ausgebildet, hat also beispielsweise einen kreisrunden Querschnitt und umgibt einen innenliegenden Hohlraum.

In einem folgenden Schritt 101 wird das Bauteil 20 in einer stickstoffhaltigen Atmosphäre auf eine Temperatur zwischen 900 °C und 1300 °C aufgeheizt. Das Glühen wird für einen Zeitraum zwischen einer Minute und zwölf Stunden durchgeführt. In der beim Glühen eingestellten stickstoffhaltigen Atmosphäre herrscht dabei ein Stickstoffpartialdruck zwischen 50 mbar und 5 bar.

Durch das Glühen und die Eindiffusion von Stickstoff aus der stickstoffhaltigen Atmosphäre in das Bauteil 20 wird eine austentische Randschicht des Stahls erzeugt, beziehungsweise stabilisiert. Diese Randschicht umgibt das Bauteil 20. Die austenitische Randschicht des Bauteils 20 umfasst nunmehr eine stickstoffhaltige Diffusionszone, welche die stickstoffhaltige Schutzschicht 22 des Bauteils 20 bildet.

In einem nachfolgenden Schritt 102 wird das Bauteil 20 abgeschreckt. Dabei wird das Bauteil 20 von der beim Glühen erhaltenen Temperatur in verhältnismäßig kurzer Zeit auf eine Temperatur von weniger als 50 °C abgekühlt. Das Abschrecken des Bauteils 20 erfolgt vorliegend bei einem Abschreckdruck zwischen 1,5 bar und 10 bar. Das Abschrecken des Bauteils wird mit einem Abschreckmedium durchgeführt. Bei dem Abschreckmedium handelt es sich vorliegend um ein Gas, aus einer Gruppe von Stickstoff, Argon oder Helium.

Durch das Glühen und Abschrecken wird das Bauteil 20 gehärtet. Der zuvor in die austenitische Randschicht diffundierte Stickstoff verbleibt dabei in der besagten Randschicht. Die Schutzschicht 22 des Bauteils 20 bleibt also nach dem Abschrecken erhalten.

In einem anschließenden Schritt 103 wird das Bauteil 20 in einem Temperaturbereich zwischen -70 °C und -273 °C tiefgekühlt. Das Tiefkühlen des Bauteils 20 wird über einen Zeitraum zwischen 15 Minuten und 30 Minuten durchgeführt.

In einem folgenden Schritt 104 erfolgt noch ein Anlassen des Bauteils 20 in einem Temperaturbereich zwischen 150 °C und 600 °C. Auch das Anlassen des Bauteils 20 wird, wie bereits das Glühen, in einer stickstoffhaltigen Atmosphäre durchgeführt.

In einem optionalen Schritt 105 kann eine weitere Bearbeitung des Bauteils 20 erfolgen. Beispielsweise kann das Bauteil 20 verformt oder durch Fräsen oder Drehen spanend verarbeitet werden, um dadurch in eine für eine spätere Anwendung erforderliche Form gebracht zu werden.

Figur 2 zeigt eine schematische Darstellung eines Querschnitts durch ein rohrförmiges Bauteil 20, das mit dem in Figur 1 dargestellten Verfahren hergestellt ist. Das rohrförmige Bauteil 20 ist, wie bereits erwähnt, aus einem Stahl hergestellt.

Das Bauteil 20 ist rohrförmig ausgebildet, hat einen kreisrunden Querschnitt und umgibt einen innenliegenden Hohlraum. Das Bauteil 20 umfasst ein Kernmaterial 25 aus Stahl. Das Kernmaterial 25 wird durch das in Figur 1 beschriebene Verfahren nur unwesentlich verändert.

Das Bauteil 20 umfasst ferner zwei Schutzschichten 22, welche durch das in Figur 1 beschriebene Verfahren erzeugt wurden. Die beiden Schutzschichten 22 sind jeweils an der Oberfläche des Bauteils 20 ausgebildet. Die beiden Schutzschichten 22 verringern insbesondere ein Eindiffundieren von Wasserstoff in das Bauteil 20.

Das Kernmaterial 25 und die beiden Schutzschichten 22 sind jeweils in Form eines Kreisrings ausgebildet. Die beiden Schutzschichten 22 umgeben dabei das Kernmaterial 25 konzentrisch. Eine der Schutzschichten 22 weist in radialer Richtung auf einen innenliegenden Hohlraum. Die andere der Schutzschichten 22 weist in radialer Richtung nach außen.

Das Bauteil 20 ist beispielsweise als eine Rohrleitung zum Transport von Wasserstoff, insbesondere zur Verwendung in einem Brennstoffzellensystem 70, verwendbar. Dabei strömt der von dem Brennstoffzellensystem 70 benötigte Wasserstoff durch den innenliegenden Hohlraum in dem Bauteil 20 entlang der inneren Schutzschicht 22.

Bei der vorliegenden Anwendung des Bauteils 20 als Rohrleitung in einem Brennstoffzellensystem 70 hat die außenliegende Schutzschicht 22 keine nennenswerte Funktion. Die außenliegende Schutzschicht 22 kann einfach an dem Bauteil 20 verbleiben. Die außenliegende Schutzschicht 22 kann aber auch mittels Drehen oder Fräsen von dem Bauteil 20 vollständig oder partiell entfernt werden.

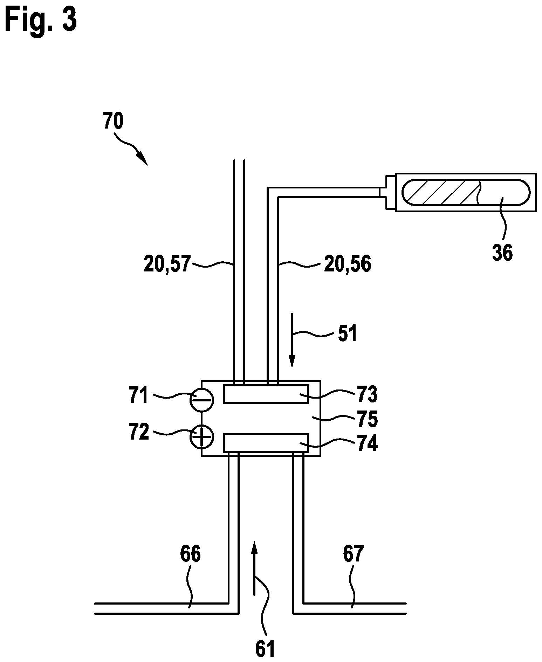

Figur 3 zeigt eine schematische Darstellung eines Brennstoffzellensystems 70. Das Brennstoffzellensystem 70 umfasst eine Brennstoffzelleneinheit 75, welche mehrere, hier nicht explizit dargestellte Brennstoffzellen aufweist. Die Brennstoffzelleneinheit 75 weist eine Anode 73 und eine Kathode 74 auf. Die einzelnen Brennstoffzellen weisen jeweils negative Elektroden auf, welche gemeinsam die Anode 73 der Brennstoffzelleneinheit 75 bilden. Die einzelnen Brennstoffzellen weisen jeweils positive Elektroden auf, welche gemeinsam die Kathode 74 der Brennstoffzelleneinheit 75 bilden.

Die Brennstoffzelleneinheit 75 weist ein negatives Terminal 71 auf, welches elektrisch mit der Anode 73 verbunden ist. Ebenso weist die Brennstoffzelleneinheit 75 ein positives Terminal 72 auf, welches elektrisch mit der Kathode 74 verbunden ist. Zwischen dem negativen Terminal 71 und dem positiven Terminal 72 der Brennstoffzelleneinheit 75 liegt im Betrieb des Brennstoffzellensystems 70 eine elektrische Spannung an. Das negative Terminal 71 und das positive Terminal 72 der Brennstoffzelleneinheit 75 sind beispielsweise mit einem hier nicht dargestellten Bordnetz eines Kraftfahrzeugs, insbesondere eines Elektrofahrzeugs, verbunden.

Das Brennstoffzellensystem 70 umfasst eine erste Zufuhrleitung 56 zur Zuführung eines Brennstoffs, insbesondere Wasserstoff, zu der Anode 73. Dazu ist die erste Zufuhrleitung 56 mit einem Druckgasspeicher 36 verbunden, in welchem Wasserstoff bei einem Druck von beispielsweise 350 bar bis 700 bar gespeichert ist. Im Betrieb des Brennstoffzellensystems 70 fließt Wasserstoff in eine erste Strömungsrichtung 51 von dem Druckgasspeicher 36 zu der Anode 73 der Brennstoffzelleneinheit 75. Das Brennstoffzellensystem 70 umfasst auch eine erste Abfuhrleitung 57 zur Abführung von überschüssigem Brennstoff, insbesondere Wasserstoff, von der Anode 73 der Brennstoffzelleneinheit 75.

Die erste Zufuhrleitung 56 zur Zuführung von Wasserstoff sowie die erste Abfuhrleitung 57 zur Abführung von Wasserstoff sind jeweils aus einem Bauteil 20, oder aus mehreren aneinander anschließenden Bauteilen 20, wie in Figur 2 dargestellt, gebildet.

Das Brennstoffzellensystem 70 umfasst ferner eine zweite Zufuhrleitung 66 zur Zuführung eines Oxidationsmittels, insbesondere Luft mit Sauerstoff, zu der Kathode 74. Dazu ist die zweite Zufuhrleitung 66 beispielsweise mit einem hier nicht dargestellten Kompressor verbunden. Der Kompressor führt komprimierte Luft in einer zweiten Strömungsrichtung 61 zu der Kathode 74 der Brennstoffzelleneinheit 75. Das Brennstoffzellensystem 70 umfasst auch eine zweite Abfuhrleitung 67 zur Abführung von überschüssigem Oxidationsmittel von der Kathode 74. Die zweite Abfuhrleitung 67 dient auch zur Abführung von Produktwasser, welches durch die elektrochemische Reaktion in den Brennstoffzellen der Brennstoffzelleneinheit 75 entsteht.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen innerhalb des Gegenstands der beiliegenden Ansprüche möglich.

## Patentansprüche

1. , Verfahren zur Herstellung eines Brennstoffzellensystems (70) enthaltend ein Bauteil (20) aus einem Stahl mit einer stickstoffhaltigen Schutzschicht (22), umfassend folgende Schritte:
- Glühen des Bauteils (20) in einer stickstoffhaltigen Atmosphäre bei einer Temperatur zwischen 900° C und 1300° C;
- Abschrecken des Bauteils (20);
- Tiefkühlen des Bauteils (20) bei einer Temperatur von weniger als -70 °C;
- Anlassen des Bauteils (20) bei einer Temperatur von mehr als 150 °C
- Glühen des Bauteils (20) zwischen einer Minute und zwölf Stunden bei einem Stickstoffpartialdruck zwischen 50 mbar und 5 bar,
- Abschrecken des Bauteils (20) bei einem Abschreckdruck zwischen 1 bar und 40 bar durchgeführt wird, wobei
das Abschrecken des Bauteils (20) mit einem Abschreckmedium ausgewählt aus einer Gruppe von Stickstoff, Argon und Helium durchgeführt wird,
- Abschrecken des Bauteils (20) auf eine Temperatur von weniger als 50 °C,
- Tiefkühlen des Bauteils (20) über einen Zeitraum zwischen 15 Minuten und 30 Minuten,
- Anlassen des Bauteils (20) in einer stickstoffhaltigen Atmosphäre.

2. . Verfahren nach Anspruch 1, wobei
der Stahl des Bauteils (20) zwischen 10 Gew% und 20 Gew% Chrom enthält.

## Claims

1. Process for producing a fuel cell system (70), comprising a component (20) made of a steel having a nitrogen-containing protective layer (22), comprising the following steps:
- annealing the component (20) in a nitrogen-containing atmosphere at a temperature between 900°C and 1300°C;
- quenching the component (20);
- freezing the component (20) at a temperature of less than -70°C;
- tempering the component (20) at a temperature of more than 150°C;
- annealing the component (20) for between one minute and twelve hours at a partial nitrogen pressure between 50 mbar and 5 bar,
- quenching the component (20) at a quench pressure between 1 bar and 40 bar, where
the quenching of the component (20) is conducted with a quench medium selected from a group of nitrogen, argon and helium,
- quenching the component (20) to a temperature of less than 50°C,
- freezing the component (20) over a period between 15 minutes and 30 minutes,
- tempering the component (20) in a nitrogen-containing atmosphere.

2. Process according to Claim 1, wherein
the steel of the component (20) contains between 10% by weight and 20% by weight of chromium.

## Revendications

1. Procédé pour la production d'un système de pile à combustible (70 contenant un composant (20) à base d'un acier comportant une couche de protection (22) contenant de l'azote, comprenant les étapes suivantes :
- recuit du composant (20) à une température comprise entre 900 °C et 1 300 °C dans une atmosphère contenant de l'azote ;
- trempe du composant (20) ;
- refroidissement à basse température du composant (20) à une température de moins de -70 °C ;
- revenu du composant (20) à une température de plus de 150°C
- recuit du composant (20) entre une minute et douze heures sous une pression partielle d'azote comprise entre 50 mbars et 5 bars.
- trempe du composant (20) sous une pression de trempe comprise entre 1 bar et 40 bars,
la trempe du composant (20) étant effectuée à l'aide d'un milieu de trempe choisi dans le groupe constitué par l'azote, l'argon et l'hélium,
- trempe du composant (20) à une température de moins de 50 °C,
- refroidissement à basse température du composant (20) pendant une durée comprise entre 15 minutes et 30 minutes,
- revenu du composant (20) dans une atmosphère contenant de l'azote.

2. Procédé selon la revendication 1, dans lequel
l'acier du composant (20) contient entre 10 % en poids et 20 % en poids de chrome.
